# EUROPEAN PATENT APPLICATION

(11) **EP 4 274 297 A1**
(43) Date of publication of application: **08.11.2023**
(21) Application number: 22171893.5
(22) Date of filing: 05.05.2022
(51) Int. Cl.: H04W 24/04, G06K 9/62

(54) **BASE STATION, USER EQUIPMENT, NETWORK AND METHOD FOR MACHINE LEARNING RELATED COMMUNICATION**

(71) Applicant: Continental Automotive Technologies GmbH, 30165 Hannover (DE)
(72) Inventor: Kim, Hojin, 81737 München (DE); Gonzalez Gonzalez, David, 81737 München (DE); Shah, Rikin, 81737 München (DE); George Stephen, Reuben, 81737 München (DE); Andrae, Andreas, 81737 München (DE); Kalyankar, Shravan Kumar, 81737 München (DE); Gonsa, Osvaldo, 81737 München (DE)
(74) Representative: Continental Corporation

(57) **Abstract**

The invention relates to a base station, a terminal and a
method for machine learning (AI/ML) related communication (C) between a network device (BS, SV) and user equipments (UE, UEs, UE1, UE2..UEk),
- wherein the user equipments (UE, UEs) are grouped (G) into at least one of several user groups (UG1, UG2, USG1, USG2),
for handling (M) of a detected (D) machine learning (AI/ML) model drift,
- wherein if a machine learning (AI/ML) model drift is detected (D),
a machine learning (AI/ML) model drift handling operation mode (M) is selected (S) for the user equipments (UE, UEs) of a user group (UG1, UG2, USG1, USG2).

## Description

The invention relates to a base station, user equipment, a network and a method for machine learning (AI/ML) related communication between a mobile telecommunication network and user equipment.

Machine learning related details are discussed e.g. in US 2022/0006485 A1, US 2021/0132941 A1, US 10,382,296 B2, US 10,878,342 B2, US 9,961,574 B1, US 2016/0342903 A1, US 2020/0202171 A1, US 2021/0390455 A1, US 2020/0151619 A1, US 2020/0099713 A1, EP 3 422 262 A1, US 2021/0157704 A1, "A survey on concept drift adaptation", J. Gama, et al, ACM Computing Surveys Volume 46 Issue 4, April 2014, "Combining Offline and Online Classifiers for Life-long Learning", Lydia Fischer, et al. 2015 International Joint Conference on Neural Networks (IJCNN), 01 October 2015, "Learning from streaming data with concept drift and imbalance - an overview", T. Ryan Hoens, et al, Prog Artif Intell, April 2012, "Channel Charting - Locating Users Within the Radio Environment Using Channel State Information", C. STUDER, et al, IEEE Access, Sep 29, 2020, "Efficient User Clustering Using a Low-Complexity Artificial Neural Network (ANN) for 5G NOMA Systems", S. PRABHA KUMARESAN, et al. IEEE Access, Sep 29, 2020, which are all incorporated by reference into this application.

An object of the invention is to allow improved machine learning (AI/ML) related communication between a mobile telecommunication network (device) and user equipment(s). This object is respectively achieved by the teaching of the independent patent claims. Embodiments of the invention allow an improved machine learning (AI/ML) related communication between a mobile telecommunication network (device) and user equipment(s), e.g. more efficient communication and/or better resource allocation.

The dependent patent claims describe some advantageous embodiments of the invention.

In the following some embodiments of the invention are described, which also in any combination present further preferred embodiments of the invention.

Embodiments of the invention are described below with reference to the enclosed figures showing the following:
FIG. 1 a conventional approach versus a so-called machine learning and/or artificial intelligence (AI/ML) approach,
FIG. 2 an AI/ML machine learning lifecycle,
FIG. 3 user equipments with artificial intelligence and/or machine learning modules for communication with network devices of a e.g. cellular mobile telecommunication network,
FIG. 4 overall performance of a wireless communication network,
Fig. 5 a user grouping of user equipment devices,
Fig. 6 a lifecycle profile map,
Fig. 7 a statistical relationship pattern between dataset category and lifecycle temporal range,
Fig. 8 UE indexes, re-ordered based on multi-threshold levels,
Fig. 9 sub-grouping of user equipments into groups and/or sub-groups,
Fig. 10 a top-down grouping based on a mixture of criteria,
Fig. 11 a signaling flow diagram of a user equipments grouping process,
Fig. 12 in a flowchart a grouping based on e.g. a lifecycle profile map,
Fig. 13 a UE group number selection based on a similarity level threshold,
Fig. 14 an AI/ML machine learning mode switching selection table,
Fig. 15 a (high-level) procedure for a model drift triggered AI/ML mode switching,
Fig. 16 an event-trigger and/or codebook-based model drift detection with AI/ML mode switching selection,
Fig. 17 a periodic timer-based model drift detection,
Fig. 18 in a flowchart an AI/ML mode switching selection procedure,
Fig. 19 sharing the triggered mode switching information with user equipment groups,
Fig. 20 a user equipments grouping with a mode switching.

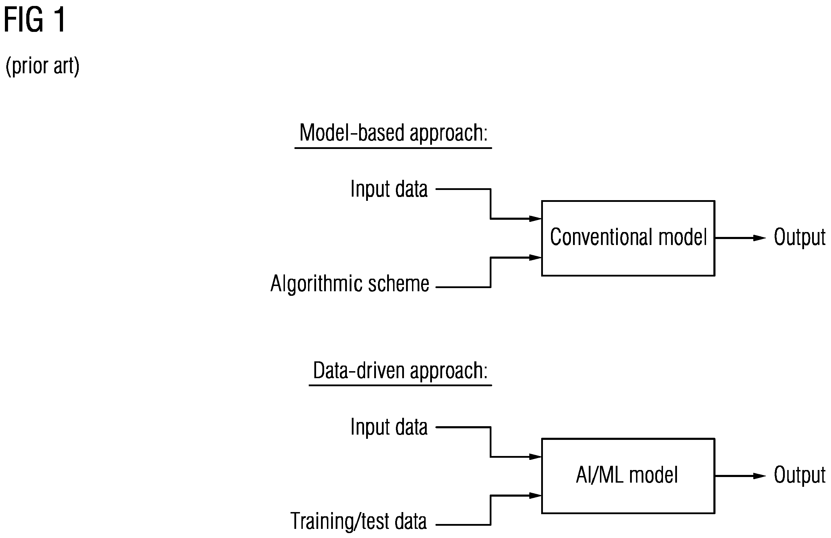

**FIG. 1** generally shows an example of a difference between a conventional model based approach using input data and a fixed algorithmic scheme for generating output data versus (below) a so called artificial intelligence and/or machine learning (AI/ML) model approach with input data and training/test data for generating output data. Instead of a fixed algorithmic scheme a training/test data / local (UE) data based data input processing (algorithm) can be used.

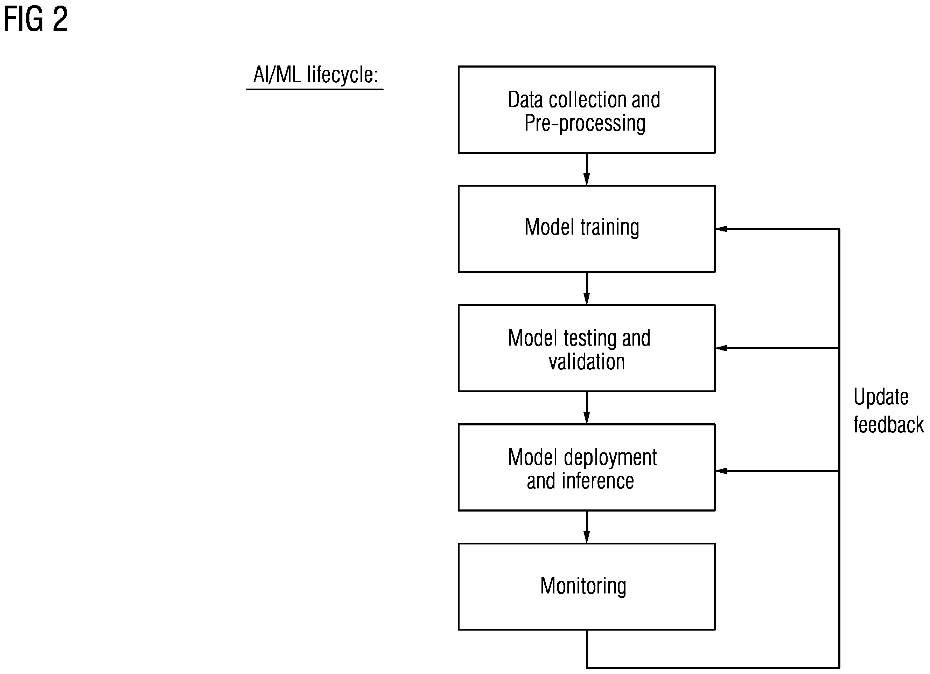

As **FIG. 2** generally shows, an AI/ML lifecycle can e.g. be split into several stages as shown in the diagram. An AI/ML (artificial intelligence and/or machine learning) model might need monitoring after deployment, if the model performance cannot be maintained continuously due to drift. E.g., simplified, the AI/ML model learnt to detect vehicles or cars at noon in summer, and it now has to detect cars at a foggy midnight on icy street with snow falling, as a (car) local data drift and a AI/ML machine learning model drift. Update feedback is provided to re-tune the model. As the cause of model performance degradation, fundamentally dataset statistical changes can occur and model inference capability can also be impacted with unseen data as input.

E.g. this scenario could use a data collection and pre-processing step, a (AI/ML) model training step, a model testing and validation step, a model deployment and inference step and a monitoring step (with feedback to the (repeated) preceding steps).

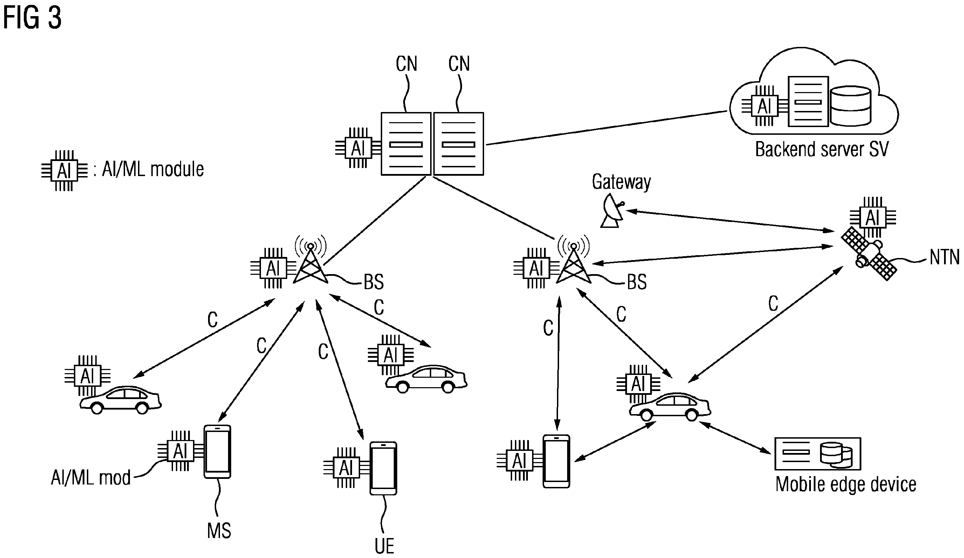

As **FIG. 3** shows, in applying an AI/ML model for any use case or application, one of the challenging issues can be to manage the lifecycle of an AI/ML model (e.g. how long is the current AI/ML model valid / usable in view of changing local data) .

It can be mainly because the data/model drift occurring during AI/ML model deployment/inference phase and it can result in performance degradation of an AI/ML model.

Also a model drift can be caused by the statistical property changes of dataset, e.g. of local data in a user equipment (UE, UEs, UE1, UE2..UEk); e.g. as a very simplified example a dataset of local data of the user equipment (UE, UEs, UE1, UE2..UEk) now getting velocity / optical/ etc. data of a car at night on ice with snowfall instead of a car in summer on a dry street in the past dataset) and the relationship between input and output for the trained model.

Therefore, AI/ML data/model drift handling can be highly important by tracking model performance such as predictability, accuracy, etc. as AI/ML model needs to be updated when drifting occurs.

When an AI/ML model enabled wireless communication network is deployed, it is then important to consider how to handle an AI/ML model lifecycle with drifting for wireless devices under operations such as model training, inference, updating, etc.

**Fig. 3** shows a cellular mobile telecommunication network (as e.g. 3G, 4G, 5G, 6G, 7G, 8G, Wi-Fi etc.) with network devices as base stations BS and core network elements CN as e.g. a backend server SV (e.g. for storing and/or updating and/or providing to BS/UE a machine learning model drift handling operation mode used for and/or e.g. in user equipments UE or BS).

Fig. 3 shows user equipments UE, (e.g. UE1, UE2, UE3, UE4, UE5, ...UEk in vehicles / cars V or mobile handsets etc.)with artificial intelligence and/or machine learning modules AI/MLmod and (cellular) telecommunication end user devices MS (as e.g. TCUs or handsets or USB cellular sticks etc.),
for communication C with network devices (e.g. base stations BS) of the cellular mobile telecommunication network NW.

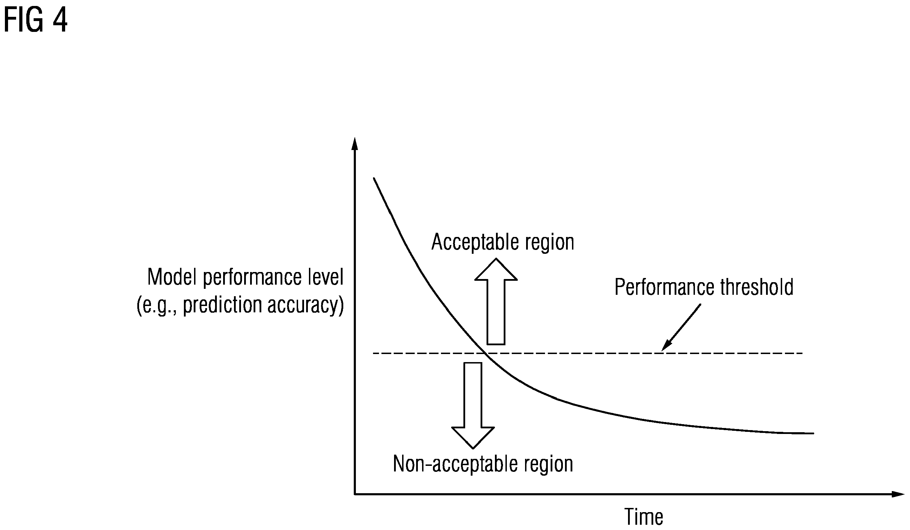

As **FIG. 4** shows, the overall performance of a wireless communication network applying an AI/ML model can be significantly impacted due to model drift with statistical characteristics changes as a model performance is degraded over time. In addition, additional signaling traffic overhead can be significant when AI/ML related signaling overhead occurs between BS and UEs for lifecycle handling. Fig, 4 shows an illustrative example of AI/ML model performance degradation over time when a drift occurs. The exact model performance degradation patterns vary depending on different environments and settings. Therefore, it may be important to address the challenge to manage AI/ML model drift in wireless communication network by investigating how to compensate for model performance degradation due to drift.

Fig. 4 shows the model performance level (e.g. prediction accuracy) over time, with an acceptable region being above the curve and a non-acceptable region being below the curve and the dotted line indicating a performance threshold.

Some key areas for changes/impacts in 3GPP might e.g. be
user equipments UE measurement report(s) (e.g. AI/ML dataset/feature statistical measure, etc.), user equipments UE capability information (e.g. AI/ML training/model cap), RRC configuration (e.g. AI/ML user grouping), Data/control signaling (e.g. DCI, UCI, MAC CE, etc., PHY 38.21x (x: 3,4,5), MAC 38.321, RRC 38.331, UE Cap 38.306).

In the following, some embodiments of the invention will be explained.

To solve AI/ML model performance degradation over time when a drift occurs, an AI/ML (artificial intelligence and/or machine learning) dataset category based user grouping may be used.

Embodiments of the invention may concern a user grouping G method and/or (AI/ML model / data) drift detection D and/or a mode M switching selection S, especially the formation of user grouping G for AI/ML drift handling and/or an AI/ML operation mode M selection S for AI/ML drift handling.

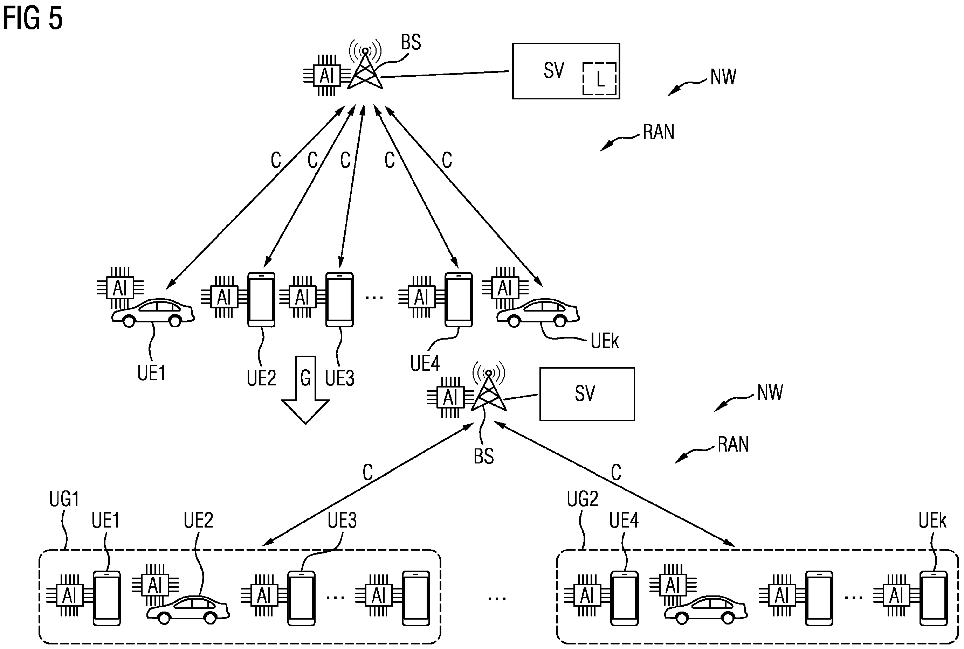

As **Fig. 5** shows for some embodiments of the invention,
to provide a solution to AI/ML model drift based performance degradation, a user grouping G of user equipment devices UE, UE1, UE2, UE3, UE4, UE5, ...UEk a radio access network RAN (of e.g. a cellular and/or Wi-Fi etc. communication C network) is proposed, wherein an AI/ML (artificial / machine learning) model is deployed e.g. for specific use cases or applications.

Based on e.g. a dataset category DC and anti-drift time duration (duration of e.g. local data (relevant for an AI/ML model;: also lifecycle temporal range LT, LTi) in a user device UE changing not more than a threshold ti, R, Ri) of the AI/ML model, the distributed user equipments UEs connected to / communicating C with here one (or more) base station BS are classified into at least one of user equipments UE user equipment groups UG1, UG2 etc.

UE grouping criteria is here based e.g. / especially on a similarity measure of pre-determined parameter(s) (e.g. dataset category DC, DCi, lifecycle temporal range category LT, LTi,); and zero or one or more sub-grouping can proceed based on e.g. parameter(s) such as service type/priority, traffic pattern, QoS.

However, here e.g. the baseline user equipments UE grouping G is based on dataset category DC, DCi and anti-drift time duration LT, LTi (of an AI/ML model). Defining a similarity level can be implementation-specific and the reference measure can e.g. include using a Euclidean distance or a correlation-based metric. An overall abstract block diagram of UE grouping concept for ML drift handling is shown in Fig. 5.

**Fig. 5** lower part shows, after a step of grouping G user equipment devices UE into groups UG1, UG2,,
user equipment devices UE1, UE2, UE3 now assigned to a group UG1 communicating (sending/ transmitting; individually and/or as a group) with a network NW, especially RAN, especially one (or more) base station BS,
and user equipment devices UE4, .. , UEk now assigned to a group UG2 communicating (sending/ transmitting; individually and/or as a group) with a network NW, especially RAN, especially one (or more) base station BS.

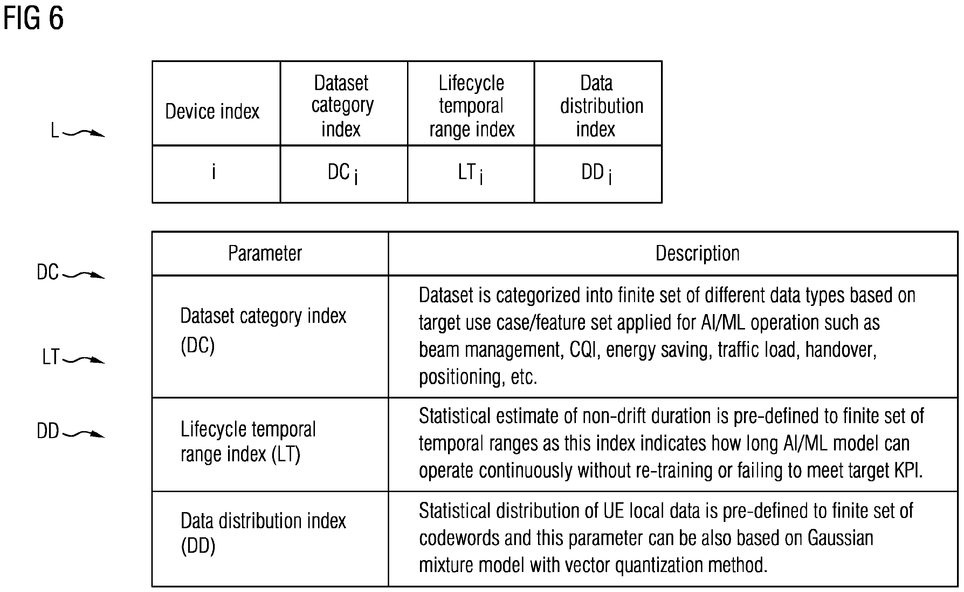

As **Fig. 6** shows for some embodiments of the invention,
an example of a newly proposed lifecycle profile map, which can e.g. consist of a list L of parameters (e.g. DC, LT, DD) as index (i) values (e.g. DCi, LTi, DDi).

Each of the parameters (e.g. DC, LT, DD; DCi, LTi, DDi) can be labeled with each of the user equipment devices UE, UE1, UE2, UE3, UE4, UE5, ...UEk or with devices for mapping.

A lifecycle profile map (e.g. list L) can be continuously maintained (in e.g. a server SV) for updates based on historical data with AI/ML trained models, e g. applied to e.g. different use cases/applications and/or with real-time communication feedback information e.g. coming in via a radio access network RAN.

An initial lifecycle profile map can be retrieved from the database (in e.g. a server SV of e.g. a network NW), where it can be stored and extracted / retrieved e.g. when a new UE grouping event G is set up.

When a lifecycle profile map is retrieved and updated, multiple BSs and mobile edge network can share it with each other so that the associated user equipments UE grouping G can be formed and re-grouped in diverse communication scenarios and/or with e.g. several base stations BS.

A lifecycle profile map or list L can e.g. comprise for several (i) user equipment (UE, UEs, UE1, UE2..UEk) and/or for several groups UG1, UG2,
a table with a dataset category DC, a LT lifecycle, and a data distribution index DD,

E.g. for a user equipments device UE1 or (i=1), a lifecycle profile map or list L can store / comprise a dataset category DC1, a lifecycle LT1, and a data distribution index DD1,
and / or for a group UG1 (i=1), a lifecycle profile map or list L can store / comprise a dataset category DC1, a lifecycle LT1, and a data distribution index DD1.

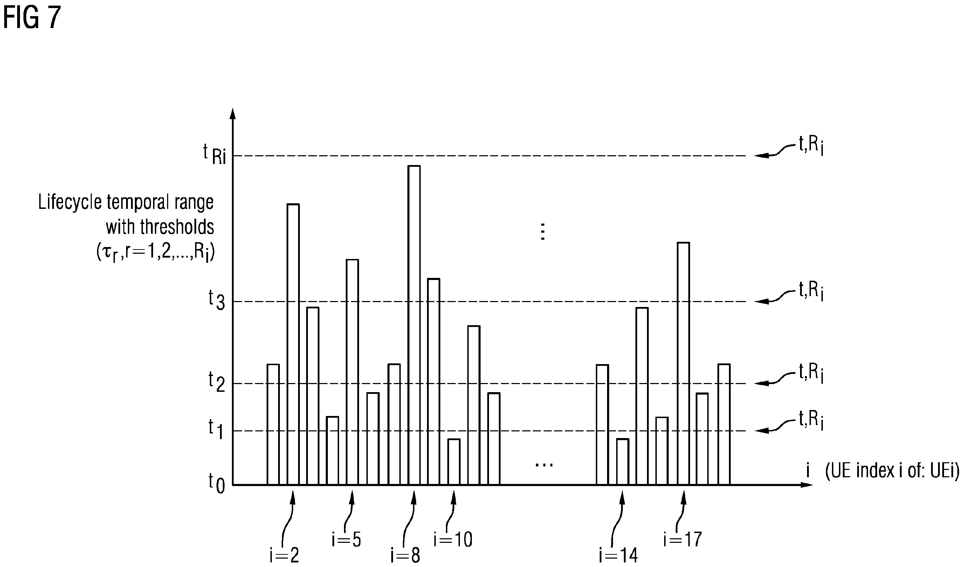

As **Fig. 7** shows for some embodiments of the invention,
for use in a grouping G of user equipments UE,
in a lifecycle profile map, a statistical relationship pattern between dataset category DC, DCi and lifecycle temporal range LT, LTi (LT for user equipment number i) , which can be monitored.

E.g. multi-threshold levels ti (regarding how different data is now compared to initial / model data) can be defined to classify each user equipment UE into different sub-groups UG1, UG2 based on e.g. the estimated lifecycle LT temporal range threshold values t1, t2, t3, t4, tR (of time or stable duration t), in association with e.g. dataset category characteristics.

For example, the threshold t1 here is the shortest lifecycle temporal range value, which indicates that a AI/ML model lifecycle LT can be very short, i.e. e.g. local data concerning or in a user equipment device UEi changed more than a threshold t1 or compared to initial data forming the initial AI/ML model.

On the other hand, the threshold tRi here is the longest lifecycle temporal range value which indicates that AI/ML model lifecycle can be quite long.

Multi-threshold levels (multi meaning e.g. depending on more than one parameter, e.g. on DC and LT) can e.g. be derived from e.g. the density-based classification by considering the degrees of densities of lifecycle temporal range estimates for user equipments UEs.

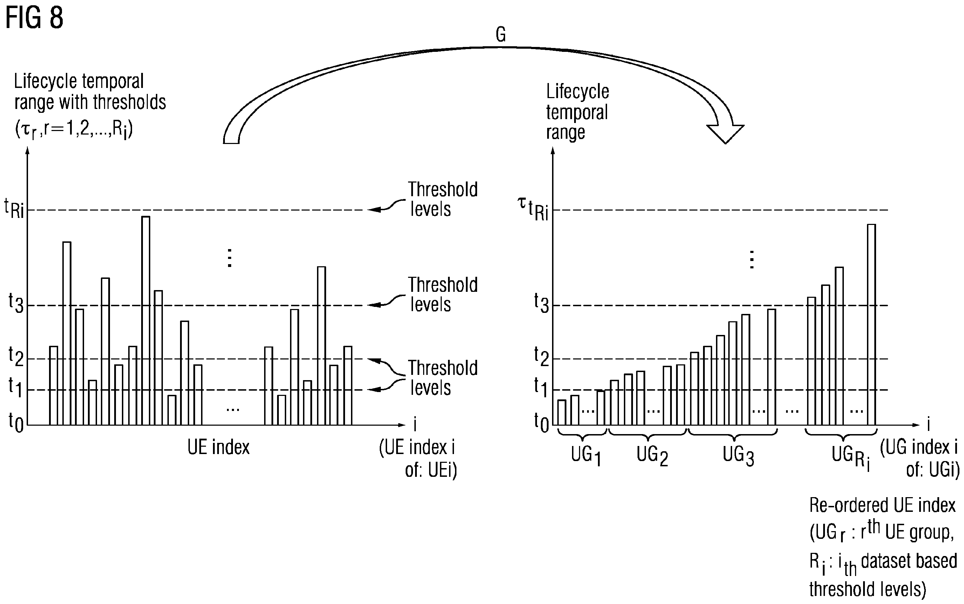

As the diagram in **Fig. 8** shows, UE index are re-ordered G (e.g. grouped G first time or re-grouped again) based on e.g. the multi-threshold levels,
e.g. depending on being between two lifetime LT levels t0, t1, t2; or between t2, t3; or between t3, t4, etc.

In Fig. 8, after grouping G of user equipments UE1, UE2..UEk into groups UG1, UG2, e.g. the user group UG1 has the shortest lifecycle LT temporal range values from t0 to t1. I.e. all user equipments UE1, UE2, UE3 in this user group UG1 have a lifecycle LT temporal range value above the threshold t0 but below the threshold t1. This group UG1 therefore e.g. gets (e.g. as a machine learning model drift handling operation mode M) the highest priority assigned e.g. for (a therefore e.g. more often and / or more prioritized and/or with more channels / time slots) communication with a base station BS).

E.g. the user group UGRi then has the lowest priority (for communication with a base station BS etc.) as this group's UGRi members UEk have the longest lifecycle temporal range LT values which indicates that this group's (UE members's) AI/ML model lifecycle can be quite / comparably long or stable.

After UE groups UG1, UGRi, UG1, UG2 are prioritized as above (e.g. relative to each other), resource allocation and/or traffic signaling for the prioritized user equipments UE group(s) can be scheduled with an according priority (e.g. a user group can get more or less air interface resources at one or more base station(s) BS for communication C of data concerning e.g. updates of machine learning data).

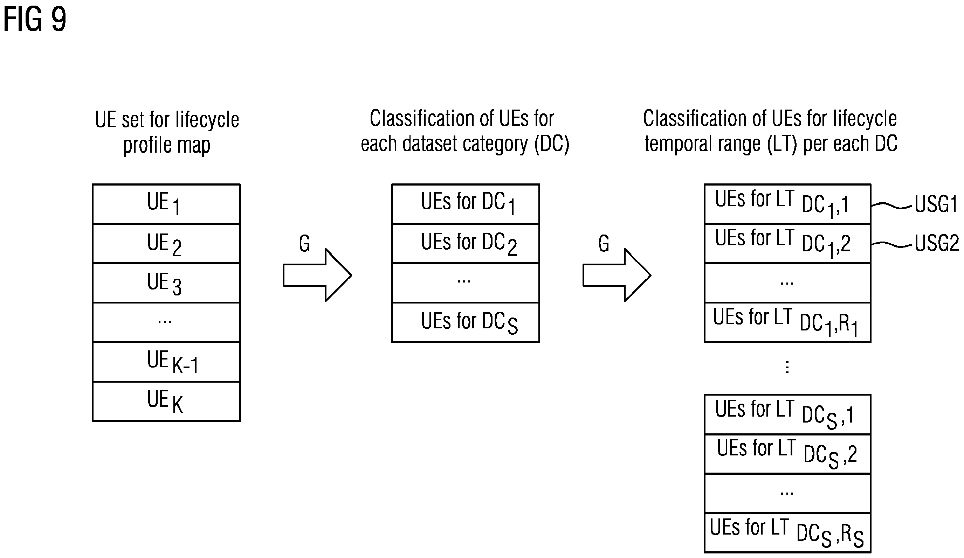

As **Fig. 9** shows for some embodiments of the invention a grouping G,
or two stages of a two-stage grouping (depending on the user equipments' respective dataset category, e.g. DC1 or DC2 or DCs) of user equipments UE1, UE2..UEk into groups UG1, UG2, .. and then (or alternatively in one step) a sub-grouping of user equipments UE1, UE2..UEk into sub groups USG1, USG2, .. etc.

The user equipments UE1, UE2..UEk process diagram in Fig. 9 shows how to e.g. perform UE group classification e.g. using lifecycle profile map indexes, i.e. depending on lifecycle temporal range(s) LT, LTi and dataset category(s) DC, DCi.

Any further sub-grouping can be executed for multi-level UE grouping with any pre-determined parameter, e.g. based similarity as criteria. After UE groups are classified, resource allocation and/or traffic signaling for the prioritized UE group(s) can be scheduled with priority.

In the UE grouping process in Fig. 9, e.g.

UE is assumed to be a set of *K* UEs as {UE₁, UE₂, ..., UE*_{K}*}.

DC (dataset category) has a set of {DC₁, DC₂, ..., DC*_{S}*} where *S* is the size of dataset categories.

LT (lifecycle temporal range) has a set of {LT_{DCi,1}, LT_{DCi,2}, ..., LT_{DCi,Ri}} where each element in this set indicates UE groups in *i*^{th} dataset category and *Rᵢ* is the size of temporal range thresholds.

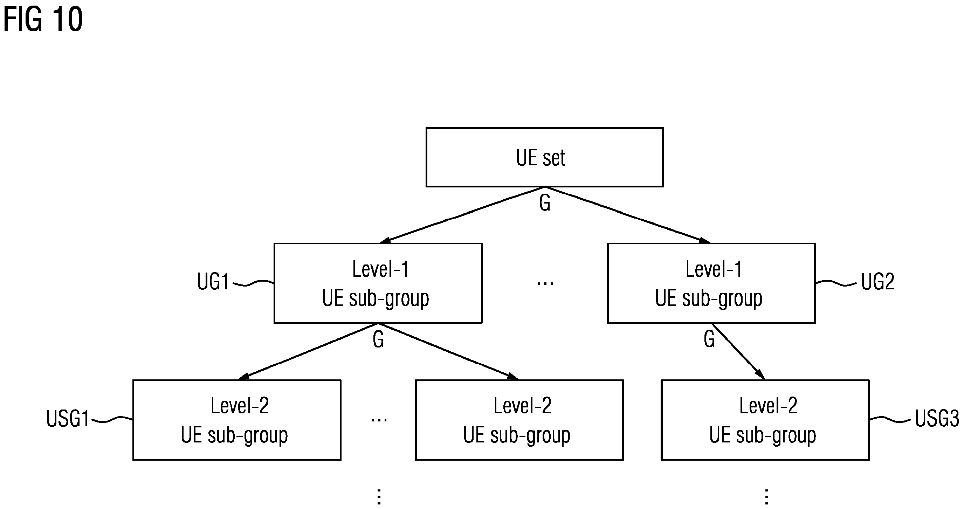

As **Fig. 10** shows for some embodiments of the invention, in a block diagram, about multi-level grouping of user equipments UE, e.g. a top-down grouping method can be e.g. possible based on a mixture of criteria.

For multi-level user grouping, multiple parameter indexes can be used for classification of users in multiple levels. The candidate parameters as criteria of user grouping can e.g. / especially include index values of lifecycle profile map, QoS (including latency constraint) requirements, service type/priority, traffic pattern, etc. In the scheme in Fig. 10, a first level of user equipments (UE) grouping into level-1 user equipments sub-groups USG1, USG2 is based on index values of a lifecycle profile map (e.g. on LT, DC).

The number of multi-levels and size of parameter index ca be both implementation-specific and configurable based on different applications.

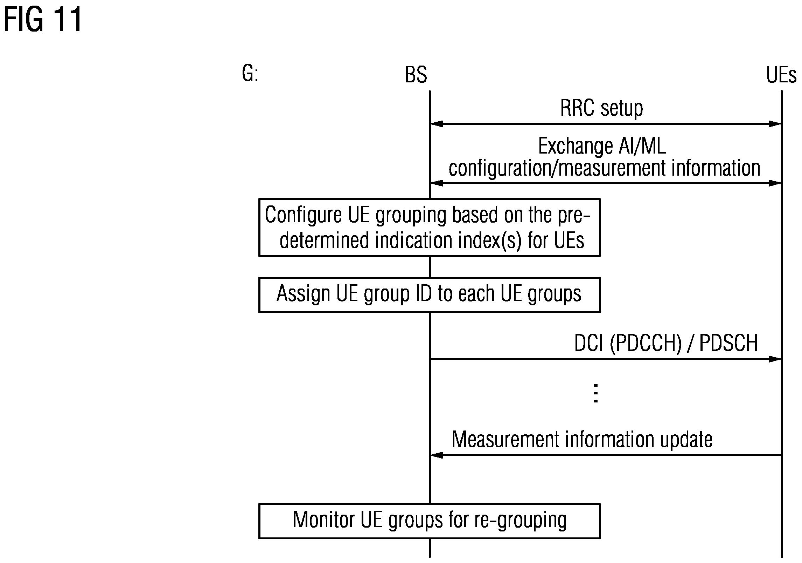

**Fig. 11** shows for some embodiments of the invention a signaling flow diagram of a user equipments UE grouping process G.

**Fig. 11** shows signaling between one or here several user equipments UEs and a base station BS for executing a user equipments UE grouping process.

After a RRC setup signaling and a signaling concerning an exchange of AI/ML configuration / measurement information,
the base station BS (or another network element) configures a user equipments UE grouping based on e.g. predetermined indication index(s) for user equipments UE. The base station BS (or another network element) assigns a user equipment UE group ID to each of the user equipments groups UG1, UG2.

Over e.g. a DCI (PDCCH) and/or PDSCH channel, the base station informs all user equipments UE1, UE2, UEk (e.g. point to point or here over a broadcast channel) about their user equipment UE group ID (the ID of the group to which the user equipments are assigned now).

In the signaling flow diagram, the criteria of UE grouping is e.g. pre-determined based on the configured parameter indexes. Once a UE grouping is determined, a UE group USG1, USG2, etc. can be identified using a specific ID such as a group RNTI. For each UE group, a DCI in PDCCH with PDSCH can then be transmitted.

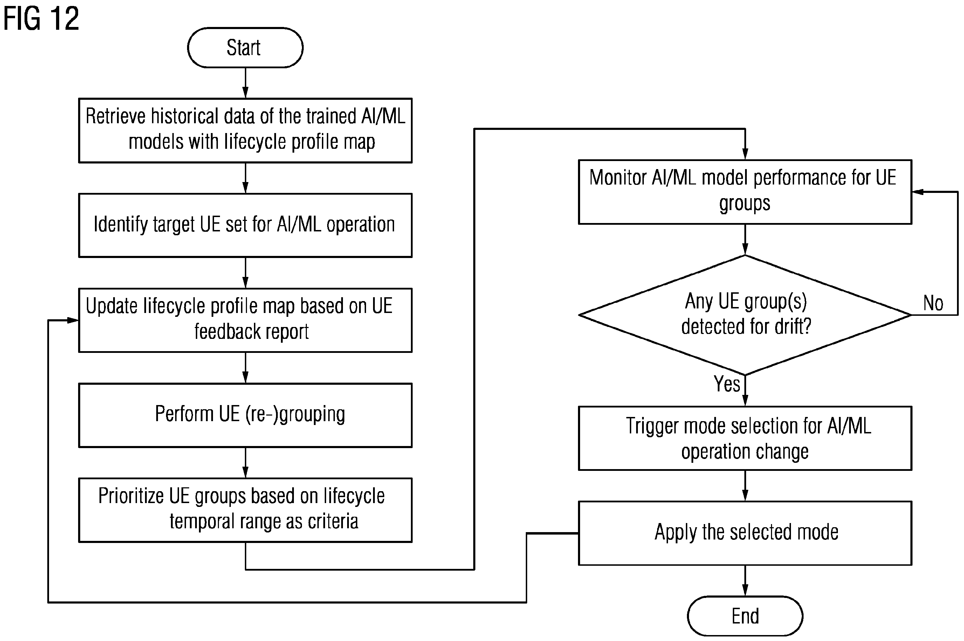

**Fig.** 12 shows for some embodiments of the invention, in a flowchart a UE grouping G based on e.g. a lifecycle profile map.

For an AI/ML model deployment in wireless network, e.g. a "lifecycle profile map" is newly introduced to identify the characteristics of key parameters related to the applied AI/ML model lifecycle LT, LTi for each of the user equipments UEi.

A "lifecycle profile map" e.g. indicates the statistical patterns with relationships between key parameters including dataset category DC, data distribution DD, and anti-drift temporal range LT for each specific use cases applied to a AI/ML model.

It can also be continuously updated and stored for maintenance based on historical data with AI/ML trained models for each use cases and applications applied to AI/ML operation in a radio access network RAN.

In the flowchart of a user equipment UE grouping G, e.g. a network device as e.g. a base station BS performs several key steps of identification, classification, and prioritization of UE grouping as well as activation of AI/ML model adaptation due to drift. A lifecycle profile map can be maintained for updates during a base station - user equipment BS-UE communication phase with a UE grouping operation.

A target user equipments UE set can also be re-grouped based on lifecycle profile map changes and a mode switching can be performance based on mode selection table.

For some embodiments of the invention, based on a user equipment UE grouping G based e.g. on a lifecycle profile map, user equipment UE feedback report can be used to update a lifecycle profile map and/or for re-grouping.

Feedback information to be contained can include
- Lifecycle profile map info.e.g. {dataset category index, lifecycle temporal range index, data distribution index}
- information representing a user equipment UE and/or user equipment group having a drift indication
- AI/ML mode selection information

A feedback signaling can e.g. be considered for the following reporting types and/or channels (as already supported by standard spec):
- Periodic feedback report: PUCCH
- Semi-persistent feedback report: PUCCH or PUSCH with DCI trigger
- Non-periodic feedback report: PUSCH

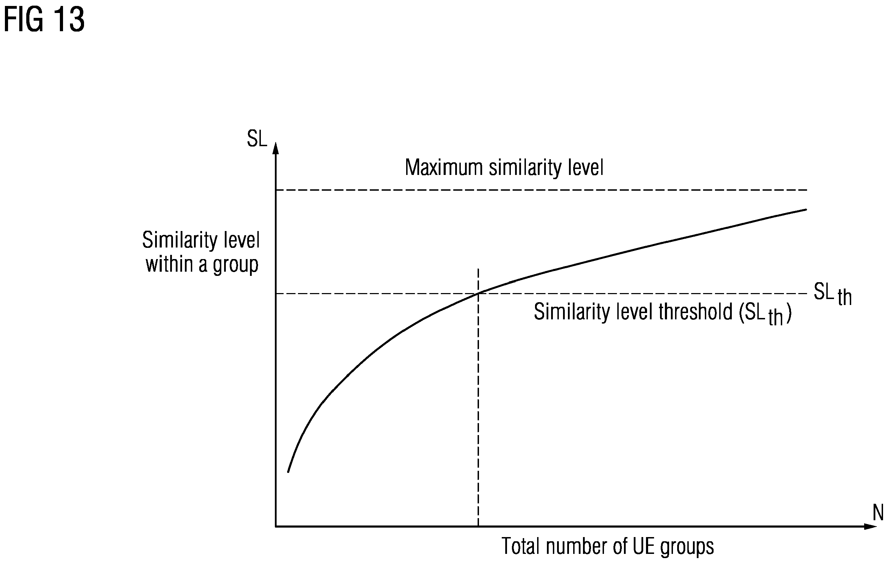

**Fig.** 13 shows for some embodiments of the invention,
a user equipment UE group number selection based on similarity level threshold.

UE group numbers can be determined based on the pre-defined threshold value of similarity level that can be measured by e.g. Euclidean distance or correlation-related metric.

A similarity level SL of lifecycle temporal range in each UE group UG1, UG2, UGN can be used as criteria of user equipments UE grouping G.

The illustrative diagram shows that the total number of UE groups increases when their similarity level threshold gets higher. In other words, the lifecycle temporal range difference across user equipments UEs within a user equipments group gets lower by having A higher similarity level threshold to meet.

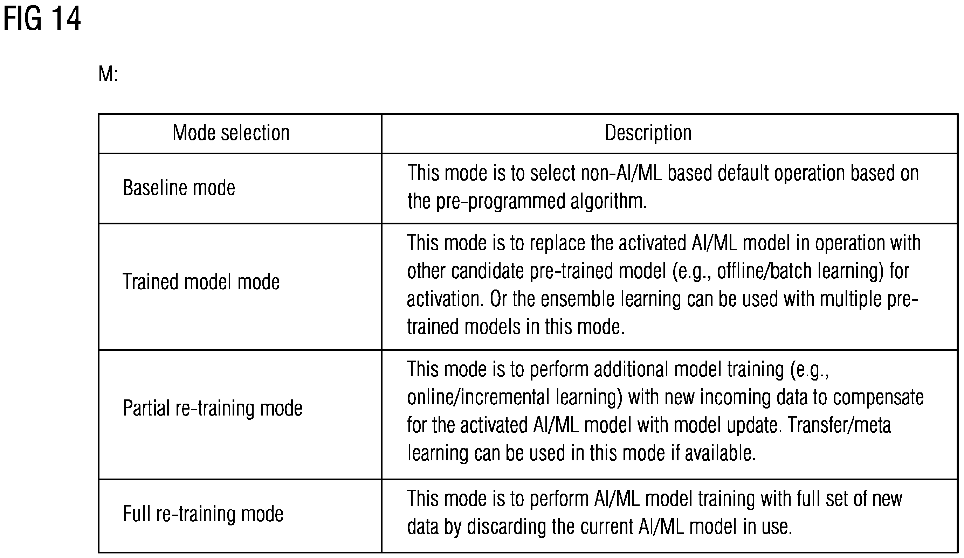

**Fig.** 14 shows for some embodiments of the invention an AI/ML mode switching selection table.

For an AI/ML model drift detection D, a model performance monitoring can be activated to check if any drift occurs for detection after an AI/ML model is deployed in a radio access network RAN.

Based on e.g. pre-defined threshold values, a model drift metric for drift detection D can include
- Local (e.g. in user equipment) data distribution change
- Model accuracy level change

For a mode switching selection, the "mode switching selection table" can e.g. contain mode selections to use such as e.g.:
- a baseline mode (non-AI/ML). e.g. a mode that is to select non-AI/ML based default operation based e.g. on a pre-programmed algorithm,
- a trained model mode, e.g. a mode that is to replace the activated AI/ML model in operation with another candidate pre-trained model (e.g. offline or batch learning) for activation, or the ensemble learning e.g. can be used with multiple pre-trained models in this mode,
- a partial re-training mode, e.g. this mode being to perform additional model training (e.g. online / incremental learning) with new incoming data to compensate for the activated AI/ML model with model update; transfer / meta learning ca be used un this mode if available,
- a full re-training mode, e.g. this mode to perform AI/ML model training with a full set of new data by discarding the current AI/ML model in use.

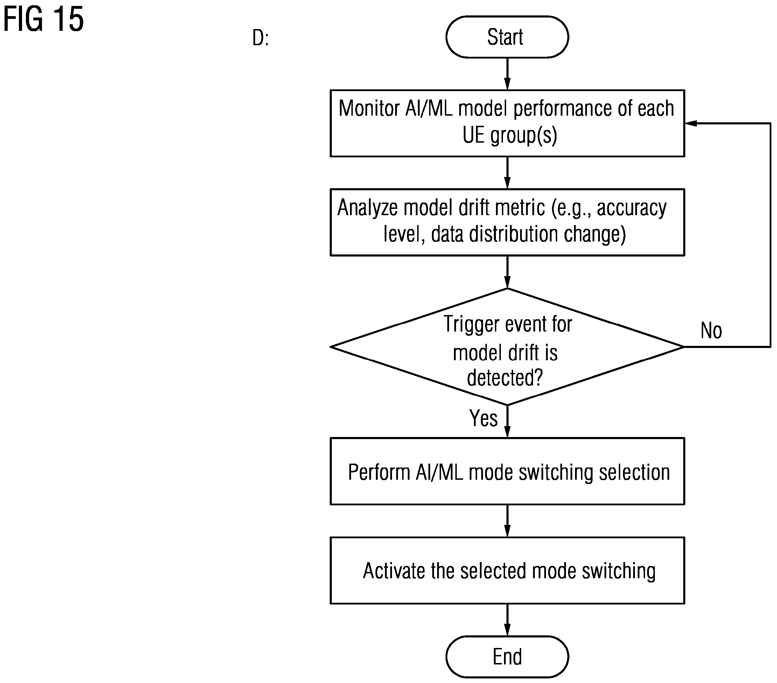

**Fig. 15** shows for some embodiments of the invention a flowchart of a high-level procedure for a model drift trigger with AI/ML mode switching.

A model drift detection e.g. can be based on
- a periodic method that uses a configurable timer based on lifecycle temporal range of a user equipment UE group and/or
- a non-periodic (or event-triggered) method where the drift metric with the pre-defined thresholds can be based on model performance measure.

A mode switching selection can e.g. consider latency constraint of application data QoS and historical data of mode switching selection records based on lifecycle profile map.

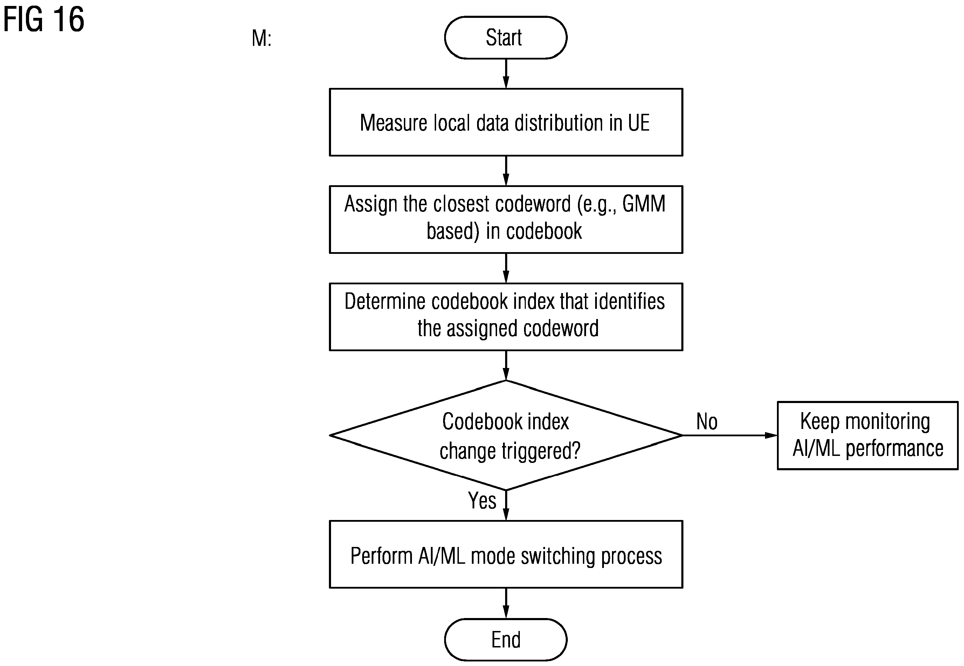

**Fig.16** shows for some embodiments of the invention in a flowchart an event-trigger based model drift detection with an AI/ML mode M switching selection (S).

The flowchart illustrates an AI/ML mode M switching process based on data distribution change as a trigger.

For a data distribution, e.g. using GMM (Gaussian mixture model), a certain number of Gaussian distributions (*GDᵢ* where *i*=1,...,*C*) can be defined.

A set of Gaussian distributions can then be quantized as codewords to represent the quantized value of data distribution.

Each of the local data distributions is then e.g. mapped to a codeword that has the closest measure. The set of all codewords is then defined as codebook. As local data distribution can be changed over time-varying channel, it triggers AI/ML model drift to occur.

If a codebook index is changed from previous index selected, it then triggers AI/ML mode switching process.

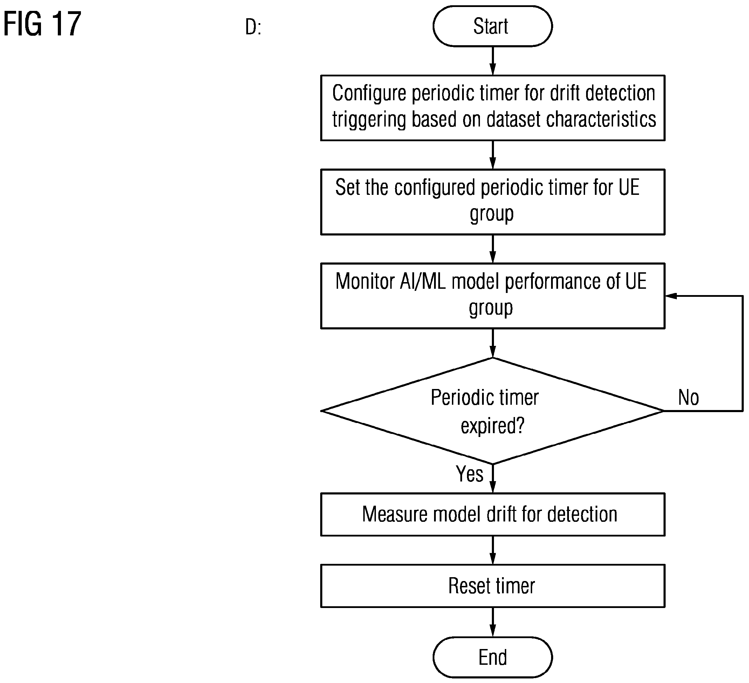

**Fig. 17** shows for some embodiments of the invention a flowchart of a periodic timer-based model drift detection D.

A configurable timer (*T_{c}*) is set based on lifecycle temporal range of a user equipment UE group UG1, UG2.

If a user equipment UE group UG1, UG2 are e.g. set as {*UG₁, UG₂,* ..., *UG_{R}*} and the UE group indexes are ordered with prioritization based on lifecycle temporal range LT, LTi, UG₁ has the shortest temporal rage and UG_{R} has the longest temporal range.

The periodic timer is e.g. also configured based on the ordered UE groups UG1, UG2, . Therefore, Tc is also set as {T_{c}(UG₁), T_{c}(UG₂),..., T_{c}(UG_{R})}. These timer thresholds are e.g. in an order of T_{c}(UG₁)<T_{c}(UG₂)< T_{c}(UG_{R}).

Threshold parameter types for event-trigger method for drift detection D can e.g. be:
- a AI/ML model accuracy metric
- a Codebook index difference (when data distribution is quantized as codeword)
- a channel quality indication (e.g., RSRP,RSRQ,SINR)

Threshold parameter types mentioned above can be used as a combination of the above as well depending on the applied use case.

For a timer for periodic method for drift detection, a timer (T_{c}) can be defined to measure model drift detection periodically.

A timer value configured by RRC can be based on lifecycle temporal range parameter of dataset category. For example, a short temporal range make timer value set to be small and vice versa as timer need to be less than temporal range. Once user equipment UE groups UG1, UG2, USG1, USG2 are (re-)formed and multicast to user equipments UEs, a timer can also be set to start as a periodic method. Once this timer is expired, a user equipment UE measures model drift detection D with AI/ML model can be in operation for a mode switching decision M. A timer can then be reset to an initial value for a re-start and a user equipment UE continues to run a (chosen) AI/ML model operation.

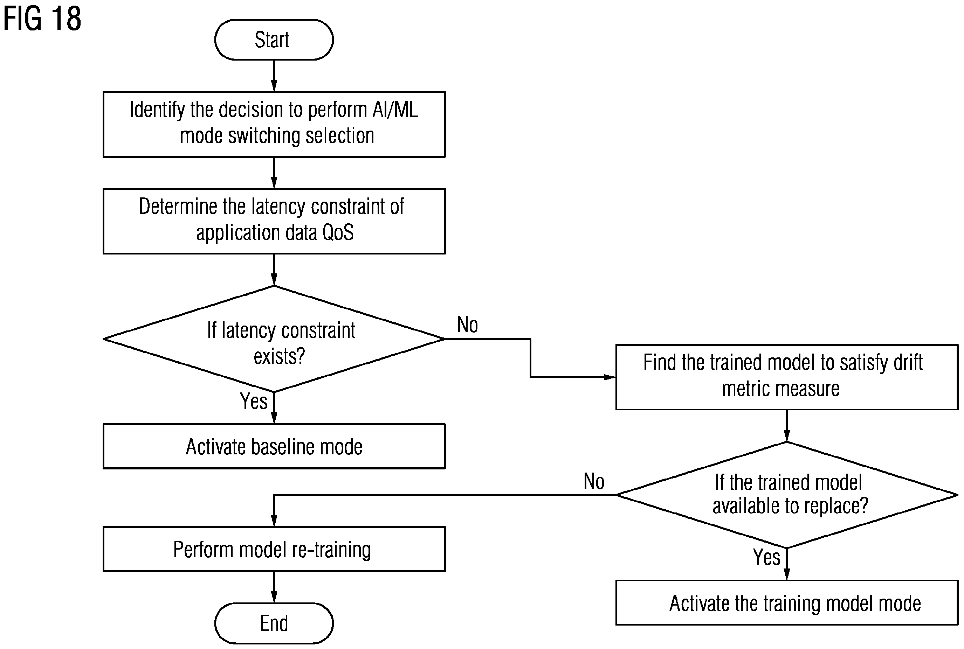

**Fig. 18** shows in a flowchart an AI/ML mode switching selection procedure S.

Based on consideration e.g. of latency related constraint for application data QoS, the baseline mode is prioritized for selection to minimize performance impact on the ongoing communication flow. If an other mode selection is allowed, the trained model use is firstly taken to check if replacing the current model. The last option is to take re-training mode partially or fully, but it can be time-constrained for model performance quality according to how long it is re-trained.

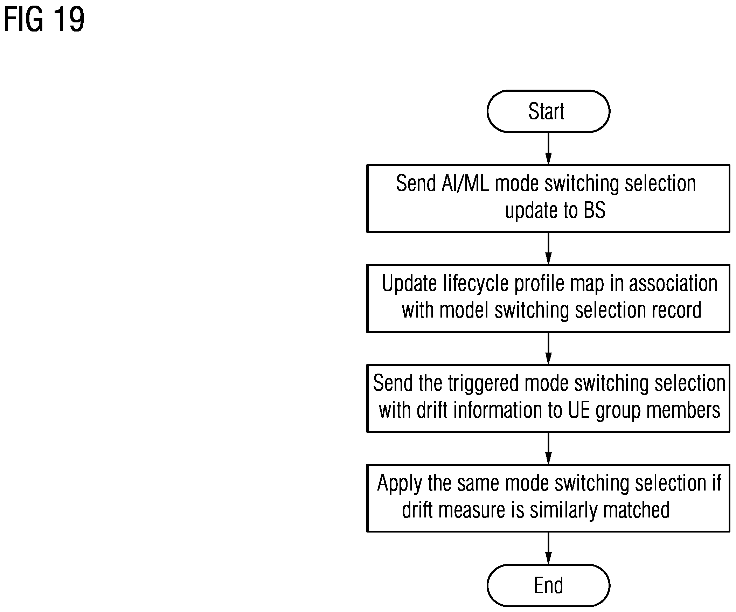

**Fig. 19** shows for some embodiments of the invention, a flowchart of sharing the triggered AI/ML mode switching information with user equipment UE group UG1, UG2, USG1, USG2 members UE, UEs, UE1, UE2..UEk.

After an AI/ML mode switching is performed for e.g. at least one of the user equipments UEin a user equipment UE group UG1, UG2, USG1, USG2,
this information is also shared with other user equipments UE members in the UE group UG1, UG2, USG1, USG2.

By doing so, other user equipment UE members that might have a similar drift D for trigger can take the prioritized mode switching selection M based on the shared information.

Then user equipments UE(s) having the triggered (D) drift can improve performance impact by taking quicker decision on mode switching selection (M).

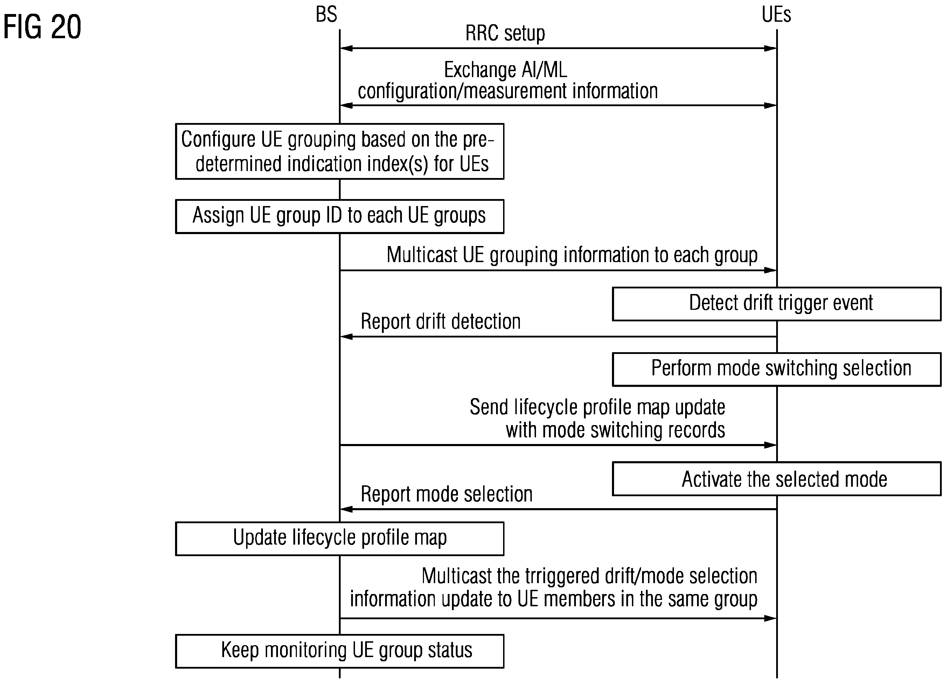

**Fig. 20** shows for some embodiments of the invention, a flowchart of a user equipments UE grouping with mode switching M.

Fig. 20 shows communication between a network element, e.g. a base station BS and user equipments UE for grouping and mode switching,
and in square boxes actions in the network element, e.g. base station BS and user equipments UE.

### Reference signs

NW network
RAN telecommunication network/ access
BS base station
SV Server
CN core network element
C Communication e.g. BS- UE
G grouping of UEs
UG1 group of user equipments (UE1, UE2..UE3)
UG2 group of user equipments (UE4..UEk)
USG1 sub-group of user equipments UE
USG2 sub group of user equipments UE
D detecting of a machine learning (AI/ML) model drift,
S selecting for at least one user group a machine learning model drift handling (M)
M model drift handling operation mode
DC dataset category, of a set of dataset categories {DC1, DC2, ..., DCS},
LT, LTDCi lifecycle temporal range category
ti threshold, of LT or times t, t0, t1, t2, t3, t4, tR
DD data distribution index
DCI user equipment group ID, of a group of user equipments UE
L list of parameters DCi, LTi, DDi
V vehicle, car

## Claims

1. Network device (BS, SV), especially cellular mobile telecommunication network element (BS, SV) and/or cellular mobile telecommunication network base station (BS),
- configured to group (G) each of several (k) user equipments (UE, UEs, UE1, UE2..UEk), configured to communicate ( C) with a network device (BS, SV), into at least one of several user groups (UG1, UG2, USG1, USG2),
- configured to detect (D) a machine learning (AI/ML) model drift related to at least one of the user equipments (UE, UEs, UE1, UE2..UEk),
- configured to select (S) for at least one user group (UG1, UG2, USG1, USG2) a machine learning model drift handling operation mode (M) for the user equipments (UE1, UE2, UE3; UE4, UEk) of the user group (UG1, UG2, USG1, USG2), if a machine learning (AI/ML) model drift is detected (D).

2. Network device according to the preceding claim,
wherein for the several user groups (UG1, UG2, USG1, USG2) different network resource allocation and/or traffic signaling priorities in communication ( C) with a network device (BS, SV) are assigned.

3. Network device according to any of the preceding claims,
especially for user equipments (UE1, UE2, UE3; UE4, UEk) with different specific use cases or applications,
- configured to group (G) user equipments (UE1, UE2, UE3; UE4, UEk) into at least or exactly one of the user groups (UG1, UG2, USG1, USG2) based on similarity criteria parameters, especially including one or two or more of:
- a dataset category (DC) of a set of dataset categories {DC1, DC2, ..., DCS}, especially cQI or voice related or non-voice related communication data categories,
- a lifecycle temporal range (LT) category of a set of lifecycle temporal range (LT) categories {LT_{DCi,1}, LT_{DCi,2}, ..., LT_{DCi,Ri}}, especially a set of times (t) without drift of the machine learning (AI/ML) model exceeding a threshold (t1, t2, tR),
- a data distribution index (DD), especially representing a measured local data distribution in a user equipment (UE, UEs, UE1, UE2..UEk) and/or an assigned closest codeword of a codebook.

4. Network device according to any of the preceding claims,
configured to decide prioritization of network resource allocation and/or traffic signaling, especially prioritization for re-training or model update signaling, differently for the user groups (UG1, UG2, USG1, USG2) and/or the sub-groups (USG1, USG2), and respectively equally for the user equipments (UE, UEs, UE1, UE2..UEk) of a group (UG1, UG2, USG1, USG2) and/or sub-group (USG1, USG2), especially with the user equipments (UE, UEs, UE1, UE2..UEk) members of a group and/or sub-group with the shortest lifecycle temporal range value getting the highest prioritization and the user equipments (UE, UEs, UE1, UE2..UEk) of a group and/or sub-group with the longest lifecycle temporal range value getting the lowest prioritization.

5. Network device according to any of the preceding claims,
- configured to group user equipments (UE1, UE2, UE3; UE4, UEk) into sub-groups and/or sub-sub-groups of user groups (UG1, UG2, USG1, USG2) based on similarity criteria parameters, especially including one or more of:
- service type requirements or measurements of communication ( C) between a mobile telecommunication network device (BS, SV) and user equipments (UE, UEs) of the sub-group or sub-sub-group,
- service priority requirements of communication ( C) between a mobile telecommunication network device (BS, SV) and user equipments (UE, UEs) of the sub-group or sub-sub-group,
- traffic pattern requirements or measurements of a communication ( C) between a mobile telecommunication network device (BS, SV) and user equipments (UE, UEs) of the sub-group or sub-sub-group,
- QoS requirements or measurements of a communication ( C) between a mobile telecommunication network device (BS, SV) and user equipments (UE, UEs) of the sub-group.

6. Network device according to any of the preceding claims,
- configured to assign a user equipment group ID (DCI) to each user groups (UG1, UG2, USG1, USG2) of (k) user equipments (UE, UEs, UE1, UE2..UEk) and/or to send to all user equipments (UE, UEs, UE1, UE2..UEk) of a group the group's user equipment group ID (DCI).

7. Network device according to any of the preceding claims,
- configured to determine the number of user equipment groups (DCI) based on a pre-defined threshold value of similarity level of lifecycle temporal range (LT) within the user group (UG1, UG2, USG1, USG2).

8. Network device according to any of the preceding claims,
- configured to store and/or update a lifecycle profile map and/or a list of parameters (DCᵢ, LTᵢ, DDᵢ) respectively indicative for user equipments (UE, UEs) to at least one of:
- a dataset category (DC) of a set of dataset categories {DC1, DC2, ..., DCS}, especially cQI or voice related vs non-voice related communication data categories,
- a lifecycle temporal range (LT) category of a set of lifecycle temporal range (LT) categories {LT_{DCi,1}, LT_{DCi,2}, ..., LT_{DCi,Ri}}, especially a set of times without drift of the machine learning model exceeding a threshold (Rᵢ),
- a data distribution index (DD), especially representing a measured local data distribution in a user equipment (UE, UEs, UE1, UE2..UEk) by an assigned closest codeword of a codebook.

9. Network device according to any of the preceding claims,
- configured to provide to other network devices a lifecycle profile map and/or a list of parameters (DCᵢ, LTᵢ, DDᵢ) respectively indicative for user equipments (UE, UEs, UE1, UE2..UEk) to at least one of:
- a dataset category (DC) of a set of dataset categories {DC1, DC2, ..., DCS}, especially cQI or voice related or non-voice related communication data categories,
- a lifecycle temporal range (LT) category of a set of lifecycle temporal range (LT) categories {LT_{DCi,1}, LT_{DCi,2}, ..., LT_{DCi,Ri}}, especially a set of times without drift of the machine learning (AI/ML) model exceeding a threshold (Rᵢ),
- a data distribution index (DD), especially representing a measured local data distribution in a user equipment (UE, UEs, UE1, UE2..UEk) by an assigned closest codeword of a codebook.

10. Network device according to any of the preceding claims,
- configured to select a machine learning mode switching in case of a detected (D) machine learning (AI/ML) model drift,
a machine learning mode especially comprising one of:
- a default machine learning model,
- a replacement of a default machine learning model by another a default machine learning model,
- a partial re-training machine learning mode, updating the last a machine learning model with new incoming local data of a user equipment (UE, UEs, UE1, UE2..UEk),
- a full re-training machine learning mode, building a new machine learning model with new incoming local data of a user equipment (UE, UEs, UE1, UE2..UEk).

11. Network device according to any of the preceding claims,
configured to detect (D) a machine learning model drift, based on a periodic event-triggered monitoring of machine learning model performance of each user group (UG1, UG2, USG1, USG2).

12. Network device according to any of the preceding claims,
configured to detect (D) a machine learning model drift, based on a non-periodic event-triggered monitoring of each user group (UG1, UG2, USG1, USG2), especially with at least one of the triggers:
- machine learning model accuracy metric
- codebook index difference
- channel quality indication.

13. Network device according to any of the preceding claims,
configured to detect (D) a machine learning model drift,
based on received measurement of local data distribution in a user equipment (UE, UEs, UE1, UE2..UEk) , preferably using an assigned closest codeword of a codebook and/or a determination of a codebook index that identifies the assigned codeword.

14. User equipment (UE, UEs, UE1, UE2..UEk),
- configured to send to a network device (BS) a feedback report, especially for a lifecycle profile map update and/or for re-grouping of user equipment (UE, UEs, UE1, UE2..UEk), especially representing at least one of:
- lifecycle profile map information, especially a dataset category index (DC), a lifecycle temporal range index (LT), a data distribution index (DD),
- information representing the user equipment (UE, UEs, UE1, UE2..UEk) or its group having a detected machine learning (AI/ML) drift indication,
- mode selection (M) information.

15. User equipment (UE, UEs, UE1, UE2..UEk), especially according to the preceding claim, configured to
- measure local data distribution in a user equipment (UE, UEs, UE1, UE2..UEk),
- assign a closest codeword of a codebook,
- determine a codebook index that identifies the assigned codeword,
- determine if a codebook index change is triggered,
- send to a network device (BS), especially for a machine learning mode (M) switching selection (S), data representing the result of this determination.

16. Telecommunication network (NW),
with at least one network device (BS) according to any of the preceding claims, and
with at least one user equipment (UE, UEs, UE1, UE2..UEk) according to any of the preceding claims.

17. Method for machine learning (AI/ML) related communication ( C) between a network device (BS, SV), especially according to any of the preceding claims and user equipments (UE, UEs, UE1, UE2..UEk) especially according to any of the preceding claims,
- wherein the user equipments (UE, UEs) are grouped (G) into at least one of several user groups (UG1, UG2, USG1, USG2),
for handling (M) of a detected (D) machine learning (AI/ML) model drift,
- wherein if a machine learning (AI/ML) model drift is detected (D),
a machine learning (AI/ML) model drift handling operation mode (M) is selected (S) for the user equipments (UE, UEs) of a user group (UG1, UG2, USG1, USG2).
